# EUROPEAN PATENT SPECIFICATION

(11) **EP 3 733 525 B1**
(45) Date of publication and mention of the grant of the patent: **09.08.2023**
(21) Application number: 19216704.7
(22) Date of filing: 16.12.2019
(51) Int. Cl.: B64D 29/06, F16B 5/12, B64D 29/08

(54) **FAN COWL SECUREMENT RETAINERS**
HALTERUNGEN ZUR SICHERUNG EINER FANVERKLEIDUNG
DISPOSITIFS DE RETENUE DE FIXATION DE CAPOT DE SOUFFLANTE

(30) Priority: 29.04.2019 IN 201941017004; 18.06.2019 US 201916444684
(43) Date of publication of application: 04.11.2020
(73) Proprietor: Rohr, Inc., Chula Vista, CA 91910-2098 (US)
(72) Inventor: SHIVARUDRAPPA, Shashidhar, 560040 Bangalore (IN); SHARMA, Rohit Kumar, 500002 Hyderabad (IN)
(74) Representative: Dehns

(56) References cited:
- EP-A2- 1 112 931
- US-A- 3 063 114
- US-A- 3 262 168
- US-A- 5 737 914
- US-A1- 2007 278 345
- US-A1- 2010 287 910
- US-A1- 2011 014 044
- US-B1- 6 340 135
- US-B2- 9 573 695

## Description

### FIELD

The present disclosure relates to aircraft nacelles, and more particularly to securement retainers for nacelle fan cowls.

### BACKGROUND

A nacelle for a turbine engine typically includes an inlet, a fan cowl, a thrust reverser, and an exhaust section. The nacelle is typically mounted to a wing or a fuselage of an aircraft via a pylon. The fan cowl is typically split into two hingedly coupled halves, which may be pivoted, or rotated, to an open position to access the turbine engine. During flight, a large pressure differential may be created between the interior and exterior of the nacelle. The increased pressure differential may generate a radially outward force at the interface between the fan cowl and the inlet. The radially outward force may create, or increase, a space or "gap" at the interface. An increased interface gap may allow exterior air to enter the interior of the nacelle, thereby increasing internal compartment pressure and/or stress (e.g., hoop stress) on the fan cowl.

US 2010/287910 A1 discloses a prior art nacelle as set forth in the preamble of claim 1.

US 2007/278345 A1 discloses a prior art device for articulating a door of a nacelle of an aircraft and a nacelle provided with said articulation device.

US 5 737 914 A discloses a prior art device for fixing an air intake to a jet engine and a jet engine incorporating such a device.

US 2011/014044 A1 discloses a prior art locking system for an air intake structure for a turbojet engine nacelle.

### SUMMARY

From a first aspect, there is provided a nacelle as recited in claim 1.

There is also provided a propulsion system as recited in claim 15.

In various embodiments, the retainer land and the second portion of the first securement retainer may be located forward of the fan cowl interface portion. In various embodiments, the retainer land and the second portion of the first securement retainer may be located aft of the fan cowl interface portion.

In various embodiments, a thrust reverser may be aft of the fan cowl. A second securement retainer may include a receptacle coupled to the interior surface of the fan cowl panel and a stud coupled to a forward thrust reverser flange of the thrust reverser.

In various embodiments, the first portion of the first securement retainer may comprise a receptacle, and the second portion of the first securement retainer may comprise a stud. In various embodiments, the first portion of the first securement retainer may comprise a stud, and the second portion of the first securement retainer may comprise a receptacle.

In various embodiments, the first portion of the first securement retainer may extend from a first circumferential end of the fan cowl panel to a second circumferential end of the fan cowl panel opposite the first circumferential end.

In various embodiments, the nacelle may further comprise a second securement retainer including at least one of a receptacle or a stud coupled to the interior surface of the fan cowl panel. The first portion of the first securement retainer may be located proximate a first forward corner of the fan cowl panel, and the at least one of the receptacle or the stud of the second securement retainer may be located proximate a second forward corner of the fan cowl panel circumferentially opposite the first forward corner.

A propulsion system is also disclosed as defined in claim 15.

Features of embodiments of the invention are set forth in the dependent claims.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a perspective view of a nacelle, in accordance with various embodiments;
FIG. 1B illustrates an exploded view of a propulsion system, in accordance with various embodiments;
FIG. 2A illustrates a partial side view of a nacelle with a securement retainer coupled between the fan cowl and the inlet, in accordance with various embodiments;
FIG. 2B illustrates a cross-section view of a nacelle with a securement retainer coupled between the fan cowl and the inlet taken along the line 2B-2B in FIG. 2A, in accordance with various embodiments;
FIGs. 3A, 3B, and 3C illustrate translating a fan cowl to a closed position, thereby causing the engagement of a securement retainer between the fan cowl and an inlet, in accordance with various embodiments;
FIGs. 4A and 4B illustrate, respectively, a partial side view and a cross-section view, taken along the line 4B-4B in FIG. 4A, of a nacelle with securement retainers coupled between the fan cowl and the inlet and between the fan cowl and the thrust reverser, in accordance with various embodiments;
FIGs. 5A and 5B illustrate, respectively, a partial side view and a cross-section view, taken along the line 5B-5B in FIG. 5A, of a nacelle with a securement retainer coupled between the fan cowl and the inlet and located forward of the interface flange of inlet, in accordance with various embodiments;
FIG. 5C illustrates a fan cowl half with securement retainer receptacles located proximate the forward corners of the fan cowl half, in accordance with various embodiments; and
FIG. 6 illustrates a securement retainer receptacle attached to an inlet and a securement retainer stud attached to a fan cowl, in accordance with various embodiments.

### DETAILED DESCRIPTION

The detailed description of various embodiments herein makes reference to the accompanying drawings, which show various embodiments by way of illustration. The detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Surface shading and/or crosshatching lines may be used throughout the figures to denote different parts, but not necessarily to denote the same or different materials. Throughout the present disclosure, like reference numbers denote like elements. Accordingly, elements with like element numbering may be shown in the figures, but may not necessarily be repeated herein for the sake of clarity.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion. A first component that is "radially outward" of a second component means that the first component is positioned at a greater distance away from a central longitudinal axis of the gas turbine engine. A first component that is "radially inward" of a second component means that the first component is positioned closer to the engine central longitudinal axis than the second component. The terminology "radially outward" and "radially inward" may also be used relative to reference axes other than the engine central longitudinal axis.

Securement retainers, as described herein, are located between the fan cowl and inlet of a nacelle. The securement retainers may be configured to prevent or reduce radially outward translation of the fan cowl. The securement retainers may block, or reduce, the flow of external air (i.e., air radially outward of the nacelle) from entering the fan cowl compartment, thereby reducing occurrences of pressure build-up within the fan cowl compartment. Current fan cowls are designed to withstand deformation and/or increased pressure build-ups within the fan cowl compartment. Reducing pressure build-up within the fan cowl compartment may allow for smaller and/or lighter weight fan cowls. In various embodiments, a securement retainer may be located between the fan cowl and the thrust reverser.

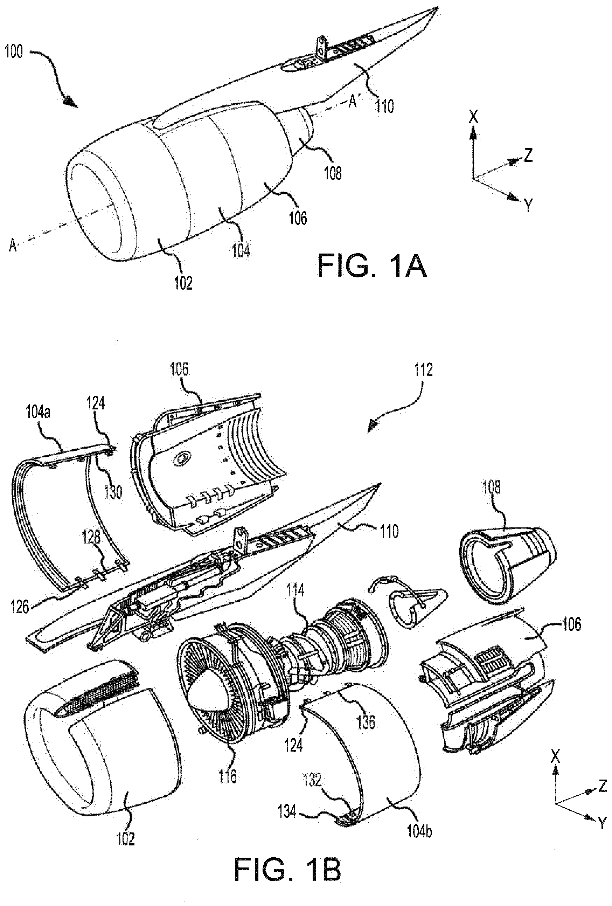

Referring to FIG. 1A, a nacelle 100 for a propulsion system is illustrated, in accordance with various embodiments. Nacelle 100 comprises an inlet 102, a fan cowl 104 and may comprise a thrust reverser 106, and an exhaust system 108. Nacelle 100 may be coupled to a pylon 110. Pylon 110 may be configured to mount nacelle 100 and an engine surrounded by nacelle 100 to an aircraft wing or aircraft body.

With reference to FIG. 1B, and continuing reference to FIG. 1A, an exploded view of a propulsion system 112 is illustrated, in accordance with various embodiments. In accordance with various embodiments, propulsion system 112 includes nacelle 100 and a gas turbine engine 114. Gas turbine engine 114 may be surrounded by components of nacelle 100. Nacelle 100 may provide smooth aerodynamic surfaces for airflow around and into gas turbine engine 114. Nacelle 100 may define at least a portion of one or more bypass air duct(s) through propulsion system 112.

In operation, a fan 116 of gas turbine engine 114 draws and directs a flow of air into and through propulsion system 112. The air may be divided into two principal flow paths: a core flow path through the core of gas turbine engine 114, and a bypass flow path through one or more bypass ducts outside of the core of gas turbine engine 114. The air in the core flow path may be directed through a compressor of gas turbine engine 114 that increases the air flow pressure and then through a combustor of gas turbine engine 114 where the air is mixed with fuel and ignited. The combustion of the fuel and air mixture is received by a series of turbine blades in a turbine section of gas turbine engine 114. The combustion gases cause the turbine blades to rotate and drive the rotors and fan 116 of gas turbine engine 114. The exhaust gases exiting the turbine section of gas turbine engine 114 may be directed through exhaust system 108. The air in the bypass flow path may be directed around the engine core through one or more bypass duct(s) defined, at least partially, by nacelle 100.

In accordance with various embodiments, fan cowl 104 may be split into a first fan cowl panel 104a and a second fan cowl panel 104b. First and second fan cowl panels 104a, 104b are configured to generally surround the fan 116 of gas turbine engine 114. First and second fan cowl panels 104a, 104b may be hingedly coupled to pylon 110 or to a stationary portion of fan cowl 104. Stated differently, first and second fan cowl panels 104a, 104b may each include one or more hinge joints 124. In this regard, first and second fan cowl panels 104a, 104b may be pivoted (or rotated), relative to pylon 110, to an open position to provide access to gas turbine engine 114.

In a closed position, first fan cowl panel 104a and second fan cowl panel 104b may be secured to one another, thereby preventing first and second fan cowl panels 104a, 104b from pivoting, or rotating, to the open position. For example, first fan cowl panel 104a may include one or more latches 126. Latches 126 are located circumferentially opposite hinge joints 124. In this regard, latches 126 are located at a first circumferential end 128 of first fan cowl panel 104a and hinge joints 124 are located at a second circumferential end 130 of first fan cowl panel 104a. First circumferential end 128 is circumferentially opposite, or approximately 180° from, second circumferential end 130. As used in the previous context, "approximately" means ± 40°. Latches 126 are configured to engage second fan cowl panel 104b and secure first fan cowl panel 104a to second fan cowl panel 104b. For example, each latch 126 may engage a latch hook 132 of second fan cowl panel 104b. Latch hooks 132 may be located circumferentially opposite hinge joints 124 of second fan cowl panel 104b. In this regard, latch hooks 132 are located at a first circumferential end 134 of second fan cowl panel 104b and hinge joints 124 are located at a second circumferential end 136 of second fan cowl panel 104b. While latches 126 are illustrated as included on first fan cowl panel 104a with latch hooks 132 included on second fan cowl panel 104b, it is further contemplated and understood that second fan cowl panel 104b may also include latches configured to engage latch hooks of first fan cowl panel 104a.

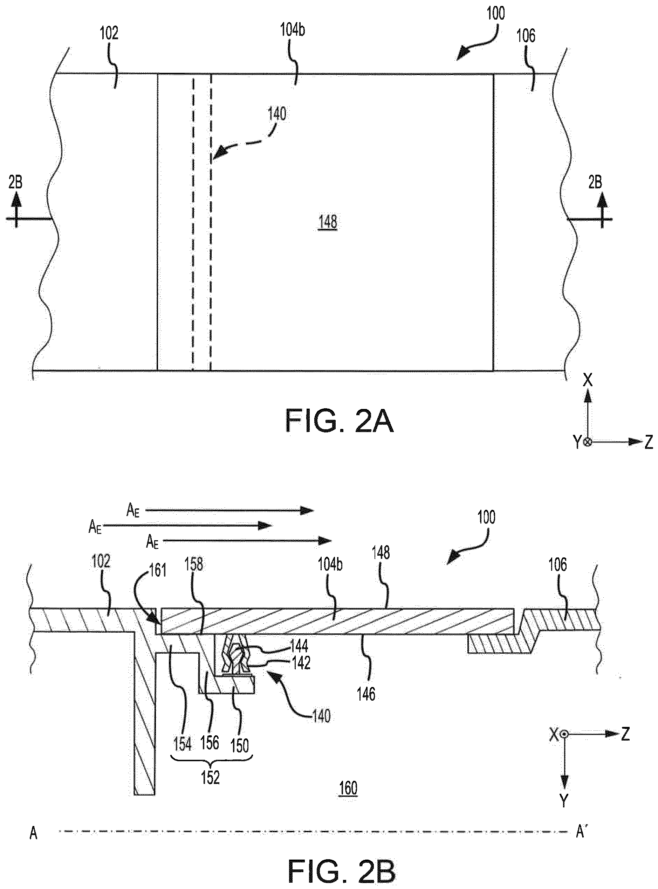

Referring now to FIGs. 2A and 2B, and with continuing reference to FIG. 1B, in accordance with various embodiments, a securement retainer 140 may be coupled between second fan cowl panel 104b and inlet 102. While FIGs. 2A and 2B illustrate securement retainer 140 between second fan cowl panel 104b and inlet 102, it should be understood that a securement retainer including the elements and functionalities as described herein with respect to securement retainer 140 may also be located between first fan cowl panel 104a and inlet 102.

Securement retainer 140 includes a receptacle 142 and a stud 144. Receptacle (or first portion) 142 of securement retainer 140 is configured to receive and engage a stud (or second portion) 144 of securement retainer 140. In various embodiments, receptacle 142 is coupled to an interior surface 146 of second fan cowl panel 104b. Receptacle 142 may be coupled by welding, an adhesive, a clip, a fastener, or any other suitable securement technique. In various embodiments, receptacle 142 may be integral with second fan cowl panel 104b. Interior surface 146 of second fan cowl panel 104b is opposite an exterior surface 148 of second fan cowl panel 104b. When fan cowl 104 is in the closed position, interior surface 146 is oriented radially inward (i.e., toward a central longitudinal axis A-A', with momentary reference to FIG. 1A, of nacelle 100) and exterior surface 148 is oriented radially outward (i.e., away from central longitudinal axis A-A'). Receptacle 142 extends radially inward from interior surface 146 of second fan cowl panel 104b. In various embodiments, receptacle 142 may be formed extending from first circumferential end 134 to second circumferential end 136 of second fan cowl panel 104b.

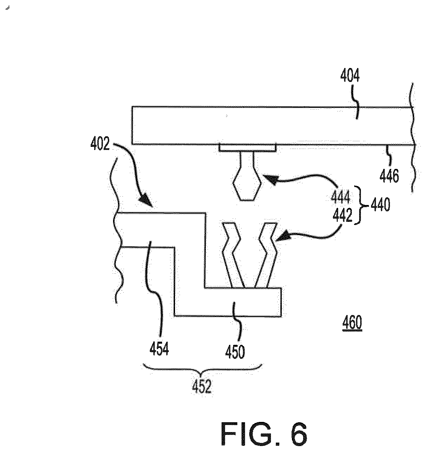

Stud 144 is coupled to a retainer land 150 of inlet 102. Stud 144 may be coupled to retainer land 150 by welding, an adhesive, a clip, a fastener, or any other suitable securement technique. In various embodiments, stud 144 may be integral with retainer land 150. Retainer land 150 comprises a radially inward portion of an aft inlet flange 152 of inlet 102. Aft inlet flange 152 includes retainer land 150, a fan cowl interface portion 154, and a connection portion 156 extending radially between fan cowl interface portion 154 and retainer land 150. Fan cowl interface portion 154 and retainer land 150 may extend in a generally axial direction. In various embodiments, retainer land 150 may be located aft of fan cowl interface portion 154. Connection portion 156 extends in a generally radial direction. When fan cowl 104 is in the closed position with latches 126 engaging latch hooks 132, interior surface 146 of second fan cowl panel 104b may contact and/or apply a radially inward force against a radially outward surface 158 of fan cowl interface portion 154. Stud 144 of securement retainer 140 extends radially outward from retainer land 150. In various embodiments, stud 144 may be formed extending around a circumference of inlet 102. For example, stud 144 may extend between 320° and 360° about central longitudinal axis A-A'. While receptacle 142 and stud 144 are illustrated as coupled to second fan cowl panel 104b and aft inlet flange 152, respectively, it is further contemplated and understood that receptacle 142 may be coupled to aft inlet flange 152 and stud 144 may be coupled to second fan cowl panel 104b, similar to securement retainer 440 in FIG. 6.

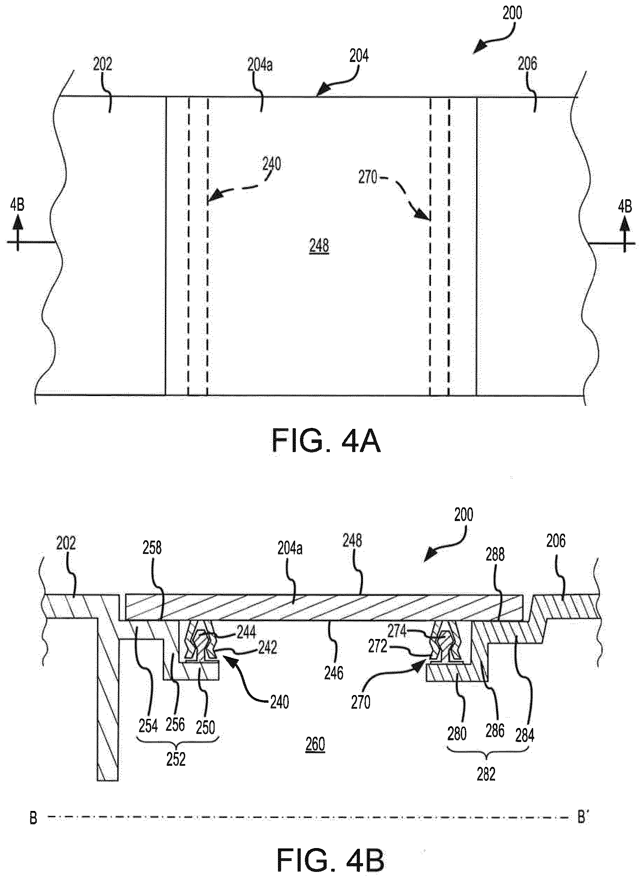

During flight, exterior airflow A_{E} may flow between the interface between a forward edge 161 of second fan cowl panel 104b and the aft edge 162 of inlet 102, with momentary reference to FIG. 4A. If interior surface 146 of second fan cowl panel 104b separates from radially outward surface 158, exterior airflow A_{E} may flow between interior surface 146 and radially outward surface 158 and generate a scooping phenomenon (e.g., apply a radially outward force against interior surface 146). Exterior airflow A_{E} entering internal compartment 160 may also increase a pressure build-up within internal compartment 160. As described in further detail below, the engagement between receptacle 142 and stud 144 of securement retainer 140 may prevent or reduce radially outward translation of second fan cowl panel 104b, thereby helping to maintain a sealing interface between interior surface 146 and radially outward surface 158. Additionally, the engagement between receptacle 142 and stud 144 of securement retainer 140 may block or reduce external airflow A_{E} from entering internal compartment 160 of nacelle 100 should a space develop between interior surface 146 and radially outward surface 158.

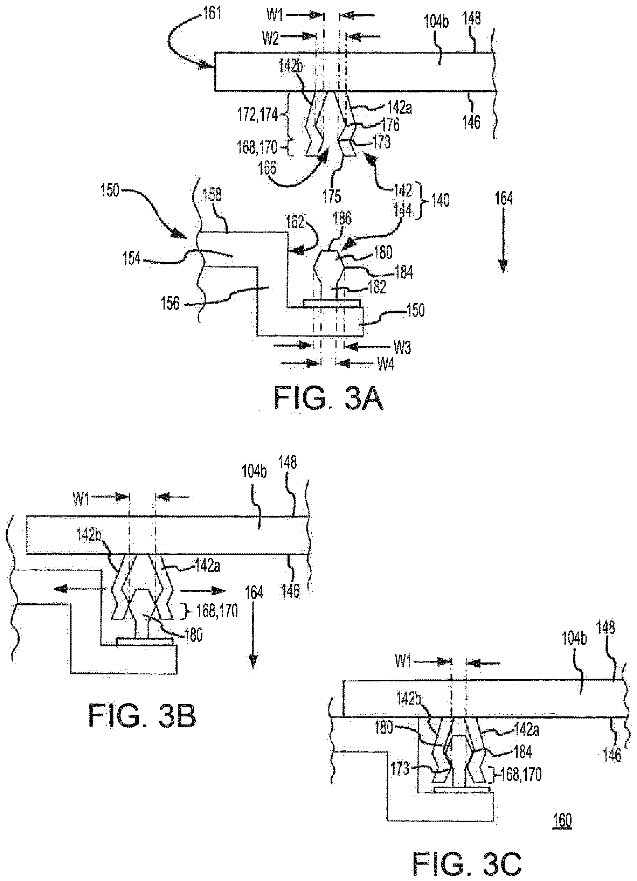

With reference to FIGs. 3A, 3B, and 3C, translation of second fan cowl panel 104b from an open position to a closed position is illustrated, in accordance with various embodiments. As second fan cowl panel 104b is closed (i.e., is moved in the radially inward direction of arrow 164), stud 144 is engaged by receptacle 142.

Referring to FIG. 3A, in various embodiments, receptacle 142 may include a pair of radially inward extending legs, referred to herein as first leg 142a and second leg 142b. First and second legs 142a, 142b may define a channel 166. To engage and reduce radially outward movement, the axial widths of channel 166 and stud 144 are varied in the radially direction. A distal portion 168 of first and second legs 142a, 142b defines a mouth 170 of channel 166. A proximal portion 172 of first and second legs 142a, 142b defines a central portion 174 of channel 166. Central portion 174 extends from mouth 170 to interior surface 146. An axial width of mouth 170 increases in the radially inward direction. Stated differently, mouth 170 includes a width W1 at its proximal or radially outward end 173; width W1 is less than the width of mouth 170 at its distal or radially inward end 175. Distal portions 168 of first and second legs 142a, 142b are non-parallel to a radial plane (i.e., to a plane normal to longitudinal axis A-A', with momentary reference to FIG. 1A).

Central portion 174 of channel 166 includes a width W2 at its axially widest point 176. Width W2 is greater than width W1. In this regard, the width of central portion 174 decreases in the radially inward direction between widest point 176 and proximal end 173 of mouth 170 and in the radially outward direction between widest point 176 and interior surface 146.

In various embodiments, stud 144 of securement retainer 140 includes a head 180 and a stem 182 extending radially inward from head 180. In various embodiments, head 180 may include a generally hexagonal shape. In various embodiments, head 180 may include a diamond, circular, oval, or any other shape. Head 180 of stud 144 includes a width W3 at its axially widest point 184. Width W3 is greater than a width W4 of stem 182. In this regard, the width of head 180 decreases in the radially inward direction between the widest point 184 and stem 182 and in the radially outward direction between widest point 184 and a distal end 186 of head 180 opposite stem 182.

Referring to FIG. 3B, as second fan cowl panel 104b is rotated in the radially inward direction of arrow 164, first and second legs 142a, 142b translate over head 180 of stud 144. The slope of head 180 between its widest point 184 and distal end 186 and the slope of mouth 170 may facilitate the translation of first and second legs 142a, 142b over head 180. As first and second legs 142a, 142b translate along head 180, width W1 increases. Stated differently, as first and second legs 142a, 142b translate over head 180, an axial distance between the distal portions 168 of first and second legs 142a, 142b increases.

Referring to FIG. 3C, as proximal end 173 of mouth 170 translates radially inward of the widest point 184 of head 180, width W1 decreases. In this regard, first and second legs 142a, 142b comprise an elasticity that causes the width W1 to decrease as first and second legs 142a, 142b translate radially inward of head 180. With combined reference to FIG. 3A and FIG. 3C, in various embodiments, the width W4 of stem 182 may be greater than the width W1 of receptacle 142 at elastic equilibrium (FIG. 3A) and/or the width W3 of head 180 may be greater than width W2 of receptacle 142 at elastic equilibrium (FIG. 3A). In this regard, when second fan cowl panel 104b is in the closed position (FIG. 3C), the elasticity of first and second legs 142a, 142b may cause first and second legs 142a, 142b to clamp or apply a force against stud 144, such that a sealing interface is formed between receptacle 142 and stud 144. When receptacle 142 engages stud 144, the varying axial width of receptacle 142 and stud 144 may prevent or reduce radially outward movement of second fan cowl panel 104b and/o may block or reduce external airflow into internal compartment 160.

Referring now to FIGs. 4A and 4B, a nacelle 200, similar to nacelle 100 in FIGs. 1A and 1B is illustrated, in accordance with various embodiments. Nacelle 200 includes an inlet 202, a fan cowl 204, and a thrust reverser 206. Fan cowl 204 may include one or more a hinged fan cowl panel(s) 204a (similar to first and second fan cowl panels 104a, 104b in FIG. 1B), such that fan cowl panel 204a can pivot, or rotate, between an open position and a closed position. A first securement retainer 240, similar to securement retainer 140 in FIGs. 2A and 2B, may be coupled between fan cowl panel 204a and inlet 202. A second securement retainer 270, similar to securement retainer 140 in FIGs. 2A and 2B, may be coupled between fan cowl panel 204a and thrust reverser 206.

First securement retainer 240 includes a receptacle (or first portion) 242 coupled to an interior surface 246 of fan cowl panel 204a, and a stud (or second portion) 244 coupled to a forward retainer land 250 of inlet 202. Receptacle 242 is configured to receive and engage stud 244. Receptacle 142 extends radially inward from interior surface 246 of fan cowl panel 204a. In various embodiments, receptacle 242 may be formed extending between opposing circumferential ends of fan cowl panel 204a. Forward retainer land 250 comprises a radially inward portion of an aft inlet flange 252 of inlet 202. Aft inlet flange 252 includes forward retainer land 250, a fan cowl interface portion 254, and a connection portion 256, similar to aft inlet flange 152 in FIG. 2B.

Second securement retainer 270 includes a second receptacle 272 and a second stud 274. Second receptacle 272 is configured to receive and engage second stud 274. In various embodiments, second receptacle 272 may be coupled to interior surface 246 of fan cowl panel 204a. Interior surface 246 of fan cowl panel 204a is opposite an exterior surface 248 of fan cowl panel 204a. Second receptacle 272 extends radially inward from interior surface 246. In various embodiments, second receptacle 272 may be formed extending between opposing circumferential ends of fan cowl panel 204a.

Second stud 274 may be coupled to an aft retainer land 280 of thrust reverser 206. Second stud 274 of second securement retainer 270 extends radially outward from aft retainer land 280. In various embodiments, second stud 274 may be formed extending around a circumference of thrust reverser 206. For example, second stud 274 may extend between 320° and 360° about a central longitudinal axis B-B' of nacelle 200. Aft retainer land 280 may comprise a radially inward portion of a forward thrust reverser flange 282 of thrust reverser 206. Forward thrust reverser flange 282 may include aft retainer land 280, an aft fan cowl interface portion 284, and an aft connection portion 286 extending radially between aft fan cowl interface portion 284 and aft retainer land 280. Aft fan cowl interface portion 284 and aft retainer land 280 may extend in a generally axial direction. In various embodiments, aft retainer land 280 may be located forward of aft fan cowl interface portion 284. Aft connection portion 286 may extend in a generally radial direction. When fan cowl panel 204a is in the closed position, interior surface 246 of fan cowl panel 204a may contact and/or apply a radially inward force against a radially outward surface 258 of fan cowl interface portion 254 of aft inlet flange 252 and against a radially outward surface 288 of aft fan cowl interface portion 284 of forward thrust reverser flange 282. While receptacles 242, 272 are illustrated as coupled to fan cowl panel 204a, it is further contemplated and understood that studs 244, 274 may be coupled to fan cowl panel 204a and receptacles 242, 272 may be coupled to aft inlet flange 252 and forward thrust reverser flange 282, respectively, similar to securement retainer 440 in FIG. 6.

The engagement between receptacle 242 and stud 244 of first securement retainer 240 and between second receptacle 272 and second stud 274 of second securement retainer 270 may prevent or reduce radially outward translation of fan cowl panel 204a, thereby helping to maintain a sealing interface between interior surface 246 and radially outward surfaces 258 and 288. Additionally, the engagement between receptacle 242 and stud 244 of first securement retainer 240 and between second receptacle 272 and second stud 274 of second securement retainer 270 may block or reduce external airflow from entering an internal compartment 260 of nacelle 200.

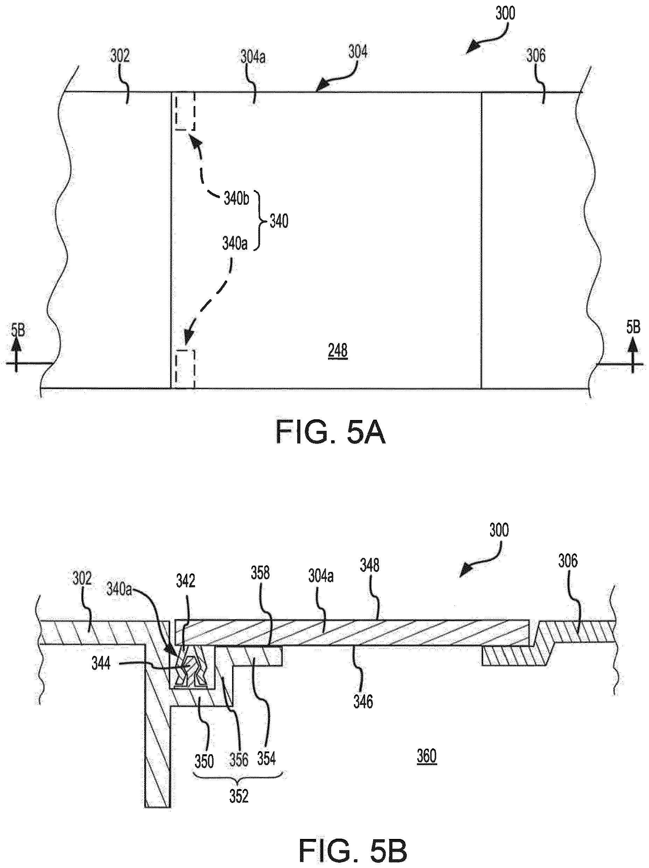

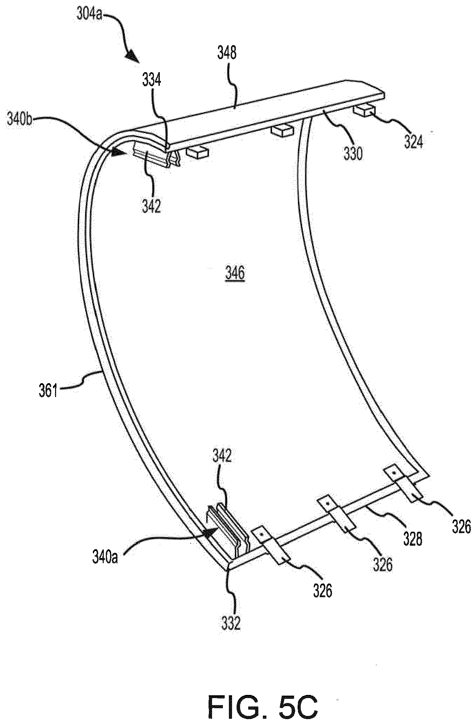

Referring now to FIGs. 5A and 5B, a nacelle 300, similar to nacelle 100 in FIGs. 1A and 1B is illustrated, in accordance with various embodiments. Nacelle 300 includes an inlet 302, a fan cowl 304, and a thrust reverser 306. Fan cowl 304 may include one or more a hinged fan cowl panel(s) 304a (similar to first and second fan cowl panels 104a, 104b in FIG. 1B), such that fan cowl panel(s) 304a can pivot, or rotate, between an open position and a closed position. A plurality of securement retainers 340, for example, first securement retainer 340a and second securement retainer 340b, may be coupled between fan cowl panel 304a and inlet 302. Securement retainers 340 each include a receptacle (or first portion) 342 and a stud (or second portion) 344. In various embodiments, securement retainers 340 may be located proximate the circumferential ends of fan cowl panel 304a. For example, and with reference to FIG. 5C, fan cowl panel 304a may include one or more latches 326 located at a first circumferential end 328 of fan cowl panel 304a, and one or more hinge joints located at an opposing second circumferential end 230 of fan cowl panel 304a. First securement retainer 340a may be located proximate a first forward corner 332 of fan cowl panel 304a. First forward corner 332 is formed by the first circumferential end 328 and a forward edge 361 of fan cowl panel 304a. Second securement retainer 340b may be located proximate a second forward corner 334 of fan cowl panel 304a that is circumferentially opposite first forward corner 332. Second forward corner 334 is formed by the second circumferential end 330 and forward edge 361 of fan cowl panel 304a.

Returning to FIGs. 5A and 5B, receptacles 342 of first and second securements retainers 340a, 340b may each be coupled to an interior surface 346 of fan cowl panel 304a. Receptacles 342 extend radially inward from interior surface 346 of fan cowl panel 304a. Receptacles 342 are configured to receive and engage studs 344.

Studs 344 of first and second securements retainers 340a, 340b may each be coupled to a retainer land 350 of inlet 302. Retainer land 350 comprises a radially inward portion of an aft inlet flange 352 of inlet 302. Aft inlet flange 352 includes retainer land 350, a fan cowl interface portion 354, and a connection portion 356 extending radially between fan cowl interface portion 354 and retainer land 350. Fan cowl interface portion 354 and retainer land 350 may extend in a generally axial direction. In various embodiments, retainer land 350 may be located forward of fan cowl interface portion 354. In this regard, securement retainers 340 may be located forward the interface between interior surface 346 and a radially outward surface 358 of fan cowl interface portion 354. While receptacle 442 and stud 444 are illustrated as coupled to fan cowl panel 304a and aft inlet flange 352, respectively, it is further contemplated and understood that receptacles 342 may be coupled to aft inlet flange 352 and studs 344 may be coupled to fan cowl panel 304a, similar to securement retainer 440 in FIG. 6.

The engagement between receptacles 342 and studs 344 of securement retainers 340 may prevent or reduce radially outward translation of fan cowl panel 304a, thereby helping to maintain a sealing interface between interior surface 346 and radially outward surface 258. Additionally, the engagement between receptacles 342 and studs 344 may block or reduce external airflow from entering an internal compartment 360 of nacelle 300.

Referring to FIG. 6, a securement retainer 440 is illustrated, in accordance with various embodiments. Securement retainer 440 includes a receptacle (or first portion) 442 and a stud (or second portion) 444. Stud 444 is coupled to an interior surface 446 of a hingedly coupled fan cowl panel 404, similar to hingedly coupled first and second fan cowl panels 104a, 104b in FIG. 2A. Stud 444 extends radially inward from interior surface 446 of fan cowl panel 404. Stud 444 is configured to be received by receptacle 442. Stated differently, receptacle 442 is configured to receive and engage stud 444. Receptacle 442 is coupled to a retainer land 450 of an inlet 402, similar to retainer land 150 and inlet 102 in FIGs. 1B and 2B. Retainer land 450 comprises a radially inward portion of an aft inlet flange 452 of inlet 402. Aft inlet flange 452 includes a fan cowl interface portion 454. In various embodiments, retainer land 450 may be located aft of fan cowl interface portion 454. In various embodiments, retainer land 450 may be located forward of fan cowl interface portion 454, similar to retainer land 350 in FIG. 5B.

Engagement between receptacle 442 and stud 444 may prevent or reduce radially outward translation of fan cowl panel 404, thereby helping to maintain a sealing interface between interior surface 446 and fan cowl interface portion 454. Additionally, the engagement between receptacle 442 and stud 444 may block or reduce external airflow from entering an internal compartment 460.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure.

The scope of the disclosure is accordingly to be limited by nothing other than the appended claims, in which reference to an element in the singular is not intended to mean "one and only one" unless explicitly so stated, but rather "one or more." It is to be understood that unless specifically stated otherwise, references to "a," "an," and/or "the" may include one or more than one and that reference to an item in the singular may also include the item in the plural. All ranges and ratio limits disclosed herein may be combined.

Moreover, where a phrase similar to "at least one of A, B, and C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A nacelle (100; 200; 300), comprising:
an inlet (102; 202; 302; 402);
a fan cowl (104; 204; 304; 404) aft of the inlet (102; 202; 302; 402), the fan cowl (104; 204; 304; 404) including a fan cowl panel (104a; 104b; 204a; 304a; 404) configured to rotate between an open position and a closed position; and
a first securement retainer (140;240; 340; 440) including a first portion (142; 242; 342; 444) coupled to an interior surface (146; 246; 346; 446) of the fan cowl panel (104a; 104b; 204a; 304a; 404) and a second portion (144; 244; 344; 442), wherein the first portion (142; 242; 342; 444) of the first securement retainer (140;240; 340; 440) extends radially inward from the interior surface (146; 246; 346; 446) of the fan cowl panel (104a; 104b; 204a; 304a; 404), wherein the first portion (142; 242; 342; 444) is configured to engage the second portion (144; 244; 344; 442);
wherein:
the inlet (102; 202; 302; 402) includes an aft inlet flange (152; 252; 352; 452) comprising:
a fan cowl interface portion (154; 254; 354; 454); and
a retainer land (150; 250; 350; 450) radially inward of the fan cowl interface portion (154; 254; 354; 454);
**characterised in that**:
the aft flange (152; 252; 352; 452) comprises a connection portion (156; 256; 356) extending radially between the fan cowl interface portion (154; 254; 354; 454) and the retainer land (150; 250; 350; 450); and
the second portion (144; 244; 344; 442) of the first securement retainer is coupled to the retainer land (150; 250; 350; 450) of the aft inlet flange (152; 252; 352; 452) and extends radially outward from the retainer land (150; 250; 350; 450).

2. The nacelle (100; 200; 300) of claim 1, wherein a radially outward surface (158; 258; 358) of the fan cowl interface portion (154; 254; 354; 454) is configured to contact the interior surface (146; 246; 346; 446) of the fan cowl (104; 204; 304; 404) when the fan cowl (104; 204; 304; 404) is in the closed position.

3. The nacelle (200) of claim 2, wherein the retainer land (250) and the second portion (244) of the first securement retainer (240) are located forward of the fan cowl interface portion (254).

4. The nacelle (100; 300) of claim 2, wherein the retainer land (150; 350; 450) and the second portion (144; 344; 442) of the first securement retainer (140; 340; 440) are located aft of the fan cowl interface portion (154; 354; 454).

5. The nacelle (200) of any preceding claim, further comprising:
a thrust reverser (206) aft of the fan cowl (204); and
a second securement retainer (270) coupled between the fan cowl panel (204a) and the thrust reverser (206), the second securement retainer (270) including a receptacle (272) coupled to the interior surface (246) of the fan cowl panel (204a) and a stud (274) coupled to a forward thrust reverser flange (280) of the thrust reverser (206).

6. The nacelle (100; 200; 300) of any preceding claim, wherein the first portion (142; 242; 342) of the first securement retainer (140; 240; 340) comprises a receptacle (142; 242; 342), and wherein the second portion (144; 244; 344) of the first securement retainer (140; 240; 340) comprises a stud (144; 244; 344).

7. The nacelle of any of claims 2 to 5, wherein the first portion (444) of the first securement retainer (440) comprises a stud (444), and wherein the second portion (442) of the first securement retainer (440) comprises a receptacle (442).

8. The nacelle (300) of claim 2, 3 or 4, further comprising a second securement retainer (340b) including at least one of a receptacle (342) or a stud (344) coupled to the interior surface (346) of the fan cowl panel (304a), wherein the first portion (342) of the first securement retainer (340) is located proximate a first forward corner of the fan cowl panel (304a), and wherein the at least one of the receptacle (342) or the stud (344) of the second securement retainer (340b) is located proximate a second forward corner of the fan cowl panel (304a) circumferentially opposite the first forward corner.

9. The nacelle (100; 200; 300) of claim 2, 3 or 4, wherein at least one of the first portion (142; 242; 342) of the first securement retainer (140; 240; 340; 440) or the second portion (442) of the first securement retainer (140; 240; 340; 440) comprises a receptacle (142; 242; 342; 442) defining a channel (166).

10. The nacelle (100; 200; 300) of claim 9, wherein the receptacle (142; 242; 342; 442) comprises a pair of legs (142a, 142b), and wherein a proximal portion (172) of the pair of legs (142a, 142b) defines a central portion (174) of the channel (166), the central portion (174) of the channel (166) comprising a varying axial width.

11. The nacelle (100; 200; 300) of claim 10, wherein a distal portion (168) of the pair of legs (142a, 142b) defines a mouth (170) of the channel (166), the mouth (170) of the channel (166) comprising a varying axial width.

12. The nacelle (100; 200; 300) of any preceding claim, wherein the first portion (142; 242; 342; 444) of the first securement retainer (140; 240; 340; 440) extends from a first circumferential end (128; 134) of the fan cowl panel (104a; 104b; 204a; 304a; 404) to a second circumferential end (130; 136) of the fan cowl panel (104a; 104b; 204a; 304a; 404) opposite the first circumferential end (128; 134).

13. The nacelle (100; 200; 300) of any of claims 2 to 5, wherein:
one of the first portion (142; 242; 342; 444) of the first securement retainer (140; 240; 340; 440) or the second portion (144; 244; 344; 442) of the first securement retainer (140; 240; 340; 440) comprises a receptacle (142; 242; 342; 442) defining a channel (166) of varying width; and
the other of the first portion (142; 242; 342; 444) of the first securement retainer (140; 240; 340; 440) or the second portion (144; 244; 344; 442) of the first securement retainer (140; 240; 340; 440) comprises a stud (144; 244; 344; 444),
wherein the receptacle (142; 242; 342; 442) is configured to receive and engage the stud (144; 244; 344; 444).

14. The nacelle (100; 200; 300) of claim 13, wherein:
the stud (144; 244; 344; 444) comprises a head (180) and a stem (182), and wherein a width (W3) of the head (180) varies such that the width (W3) of the head (180) decreases between a widest point (184) of the head (180) and the stem (182) and between the widest point (184) of the head (180) and a distal end (186) of the head (180) opposite the stem (182), wherein an axial width (W4) of the stem (182) is greater than an axial width (W1) of the receptacle (142; 242; 342; 442) at an elastic equilibrium of the receptacle (142; 242; 342; 442).

15. A propulsion system (112), comprising:
a gas turbine engine (114); and
the nacelle (100; 200; 300) of any preceding claim and radially outward of the gas turbine engine (114).

## Patentansprüche

1. Gondel (100; 200; 300), umfassend:
einen Einlass (102; 202; 302; 402);
eine Fanverkleidung (104; 204; 304; 404) hinter dem Einlass (102; 202; 302; 402), wobei die Fanverkleidung (104; 204; 304; 404) eine Fanverkleidungsplatte (104a; 104b; 204a; 304a; 404) beinhaltet, die konfiguriert ist, um zwischen einer offenen Position und einer geschlossenen Position zu rotieren; und eine erste Sicherungshalterung (140; 240; 340; 440), die einen ersten Abschnitt (142; 242; 342; 444), der mit einer Innenfläche (146; 246; 346; 446) der Fanverkleidungsplatte (104a; 104b; 204a; 304a; 404) gekoppelt ist, und einen zweiten Abschnitt (144; 244; 344; 442) beinhaltet, wobei sich der erste Abschnitt (142; 242; 342; 444) der ersten Sicherungshalterung (140; 240; 340; 440) radial von der Innenfläche (146; 246; 346; 446) der Fanverkleidungsplatte (104a; 104b; 204a; 304a; 404) nach innen erstreckt, wobei der erste Abschnitt (142; 242; 342; 444) konfiguriert ist, um mit dem zweiten Abschnitt (144; 244; 344; 442) in Eingriff zu kommen;
wobei:
der Einlass (102; 202; 302; 402) einen hinteren Einlassflansch (152; 252; 352; 452) beinhaltet, der Folgendes umfasst:
einen Fanverkleidungs-Schnittstellenabschnitt (154; 254; 354; 454); und
einen Halterungssteg (150; 250; 350; 450) radial innerhalb des Fanverkleidungs-Schnittstellenabschnitts (154; 254; 354; 454); **dadurch gekennzeichnet, dass**:
der hintere Flansch (152; 252; 352; 452) einen Verbindungsabschnitt (156; 256; 356) umfasst, der sich radial zwischen dem Fanverkleidungs-Schnittstellenabschnitt (154; 254; 354; 454) und dem Halterungssteg (150; 250; 350; 450) erstreckt; und
der zweite Abschnitt (144; 244; 344; 442) der ersten Sicherungshalterung mit dem Halterungssteg (150; 250; 350; 450) des hinteren Einlassflansches (152; 252; 352; 452) gekoppelt ist und sich radial von dem Halterungssteg (150; 250; 350; 450) nach außen erstreckt.

2. Gondel (100; 200; 300) nach Anspruch 1, wobei eine radial äußere Oberfläche (158; 258; 358) des Fanverkleidungs-Schnittstellenabschnitts (154; 254; 354; 454) konfiguriert ist, um die Innenfläche (146; 246; 346; 446) der Fanverkleidung (104; 204; 304; 404) zu berühren, wenn die Fanverkleidung (104; 204; 304; 404) in der geschlossenen Position ist.

3. Gondel (200) nach Anspruch 2, wobei sich der Halterungssteg (250) und der zweite Abschnitt (244) der ersten Sicherungshalterung (240) vor dem Fanverkleidungs-Schnittstellenabschnitt (254) befinden.

4. Gondel (100; 300) nach Anspruch 2, wobei sich der Halterungssteg (150; 350; 450) und der zweite Abschnitt (144; 344; 442) der ersten Sicherungshalterung (140; 340; 440) hinter dem Fanverkleidungs-Schnittstellenabschnitt (154; 354; 454) befinden.

5. Gondel (200) nach einem der vorhergehenden Ansprüche, ferner umfassend:
einen Schubumkehrer (206) hinter der Fanverkleidung (204); und eine zweite Sicherungshalterung (270), die zwischen der Fanverkleidungsplatte (204a) und dem Schubumkehrer (206) gekoppelt ist, wobei die zweite Sicherungshalterung (270) eine Aufnahme (272), die mit der Innenfläche (246) der Fanverkleidungsplatte (204a) gekoppelt ist, und einen Bolzen (274), der mit einem Vorwärtsschubumkehrerflansch (280) des Schubumkehrers (206) gekoppelt ist, beinhaltet.

6. Gondel (100; 200; 300) nach einem der vorhergehenden Ansprüche, wobei der erste Abschnitt (142; 242; 342) der ersten Sicherungshalterung (140; 240; 340) eine Aufnahme (142; 242; 342) umfasst, und wobei der zweite Abschnitt (144; 244; 344) der ersten Sicherungshalterung (140; 240; 340) einen Bolzen (144; 244; 344) umfasst.

7. Gondel nach einem der Ansprüche 2 bis 5, wobei der erste Abschnitt (444) der ersten Sicherungshalterung (440) einen Bolzen (444) umfasst und wobei der zweite Abschnitt (442) der ersten Sicherungshalterung (440) eine Aufnahme (442) umfasst.

8. Gondel (300) nach Anspruch 2, 3 oder 4, ferner umfassend eine zweite Sicherungshalterung (340b), die mindestens eine von einer Aufnahme (342) oder einem Bolzen (344) beinhaltet, der mit der Innenfläche (346) der Fanverkleidungsplatte (304a) gekoppelt ist, wobei sich der erste Abschnitt (342) des ersten Sicherungshalterung (340) in der Nähe einer ersten vorderen Ecke der Fanverkleidungsplatte (304a) befindet und wobei sich die mindestens eine von der Aufnahme (342) oder dem Bolzen (344) der zweiten Sicherungshalterung (340b) in der Nähe einer zweiten vorderen Ecke der Fanverkleidungsplatte (304a) umfangsmäßig gegenüber der ersten vorderen Ecke befindet.

9. Gondel (100; 200; 300) nach Anspruch 2, 3 oder 4, wobei mindestens einer von dem ersten Abschnitt (142; 242; 342) der ersten Sicherungshalterung (140; 240; 340; 440) oder dem zweiten Abschnitt (442) der ersten Sicherungshalterung (140; 240; 340; 440) eine Aufnahme (142; 242; 342; 442) umfasst, die einen Kanal (166) definiert.

10. Gondel (100; 200; 300) nach Anspruch 9, wobei die Aufnahme (142; 242; 342; 442) ein Paar Beine (142a, 142b) umfasst und wobei ein proximaler Abschnitt (172) des Paars Beine (142a, 142b) einen zentralen Abschnitt (174) des Kanals (166) definiert, wobei der zentrale Abschnitt (174) des Kanals (166) eine variierende axiale Breite umfasst.

11. Gondel (100; 200; 300) nach Anspruch 10, wobei ein distaler Abschnitt (168) des Paars Beine (142a, 142b) eine Mündung (170) des Kanals (166) definiert, wobei die Mündung (170) des Kanals (166) eine variierende axiale Breite umfasst.

12. Gondel (100; 200; 300) nach einem der vorhergehenden Ansprüche, wobei sich der erste Abschnitt (142; 242; 342; 444) der ersten Sicherungshalterung (140; 240; 340; 440) von einem ersten Umfangsende (128; 134) der Fanverkleidungsplatte (104a; 104b; 204a; 304a; 404) zu einem zweiten Umfangsende (130; 136) der Fanverkleidungsplatte (104a; 104b; 204a; 304a; 404) gegenüber dem ersten Umfangsende (128; 134) erstreckt.

13. Gondel (100; 200; 300) nach einem der Ansprüche 2 bis 5, wobei:
einer von dem ersten Abschnitt (142; 242; 342; 444) der ersten Sicherungshalterung (140; 240; 340; 440) oder dem zweiten Abschnitt (144; 244; 344; 442) der ersten Sicherungshalterung (140; 240; 340; 440) eine Aufnahme (142; 242; 342; 442) umfasst, die einen Kanal (166) mit variierender Breite definiert; und
der andere von dem ersten Abschnitt (142; 242; 342; 444) der ersten Sicherungshalterung (140; 240; 340; 440) oder dem zweiten Abschnitt (144; 244; 344; 442) der ersten Sicherungshalterung (140; 240; 340; 440) einen Bolzen (144; 244; 344; 444) umfasst, wobei die Aufnahme (142; 242; 342; 442) konfiguriert ist, um den Bolzen (144; 244; 344; 444) aufzunehmen und mit diesem in Eingriff zu kommen.

14. Gondel (100; 200; 300) nach Anspruch 13, wobei:
der Bolzen (144; 244; 344; 444) einen Kopf (180) und einen Schaft (182) umfasst und wobei eine Breite (W3) des Kopfes (180) so variiert, dass die Breite (W3) des Kopfes (180) zwischen einer breitesten Stelle (184) des Kopfes (180) und dem Schaft (182) sowie zwischen der breitesten Stelle (184) des Kopfes (180) und
einem dem Schaft (182) gegenüberliegenden distalen Ende (186) des Kopfes (180) abnimmt, wobei eine axiale Breite (W4) des Schafts (182) größer ist als eine axiale Breite (W1) der Aufnahme (142; 242; 342; 442) bei einem elastischen Gleichgewicht der Aufnahme (142; 242; 342; 442).

15. Antriebssystem (112), umfassend:
ein Gasturbinentriebwerk (114); und
die Gondel (100; 200; 300) nach einem der vorhergehenden Ansprüche und radial außerhalb des Gasturbinentriebwerks (114).

## Revendications

1. Nacelle (100 ; 200 ; 300), comprenant :
une entrée (102 ; 202 ; 302 ; 402) ;
un capot de soufflante (104 ; 204 ; 304 ; 404) à l'arrière de l'entrée (102 ; 202 ; 302 ; 402), le capot de soufflante (104 ; 204 ; 304 ; 404) comportant un panneau de capot de soufflante (104a ; 104b ; 204a ; 304a ; 404) configuré pour tourner entre une position ouverte et une position fermée ; et
un premier dispositif de retenue de fixation (140 ; 240 ; 340 ; 440) comportant une première partie (142 ; 242 ; 342 ; 444) couplée à une surface intérieure (146 ; 246 ; 346 ; 446) du panneau de capot de soufflante (104a ; 104b ; 204a ; 304a ; 404) et une seconde partie (144 ; 244 ; 344 ; 442), dans laquelle la première partie (142 ; 242 ; 342 ; 444) du premier dispositif de retenue de fixation (140 ; 240 ; 340 ; 440) s'étend radialement vers l'intérieur depuis la surface intérieure (146 ; 246 ; 346 ; 446) du panneau de capot de soufflante (104a ; 104b ; 204a ; 304a ; 404), dans laquelle la première partie (142 ; 242 ; 342 ; 444) est configurée pour venir en prise avec la seconde partie (144 ; 244 ; 344 ; 442) ;
dans laquelle :
l'entrée (102 ; 202 ; 302 ; 402) comporte une bride d'entrée arrière (152 ; 252 ; 352 ; 452) comprenant :
une partie d'interface de capot de soufflante (154 ; 254 ; 354 ; 454) ; et
un méplat de retenue (150 ; 250 ; 350 ; 450) radialement vers l'intérieur de la partie d'interface de capot de soufflante (154 ; 254 ; 354 ; 454) ;
**caractérisée en ce que** :
la bride arrière (152 ; 252 ; 352 ; 452) comprend une partie de raccordement (156 ; 256 ; 356) s'étendant radialement entre la partie d'interface de capot de soufflante (154 ; 254 ; 354 ; 454) et le méplat de retenue (150 ; 250 ; 350 ; 450) ; et
la seconde partie (144 ; 244 ; 344 ; 442) du premier dispositif de retenue de fixation est couplée au méplat de retenue (150 ; 250 ; 350 ; 450) de la bride d'entrée arrière (152 ; 252 ; 352 ; 452) et s'étend radialement vers l'extérieur du méplat de retenue (150 ; 250 ; 350 ; 450).

2. Nacelle (100 ; 200 ; 300) selon la revendication 1, dans laquelle une surface radialement extérieure (158 ; 258 ; 358) de la partie d'interface de capot de soufflante (154 ; 254 ; 354 ; 454) est configurée pour entrer en contact avec la surface intérieure (146 ; 246 ; 346 ; 446) du capot de soufflante (104 ; 204 ; 304 ; 404) lorsque le capot de soufflante (104 ; 204 ; 304 ; 404) est en position fermée.

3. Nacelle (200) selon la revendication 2, dans laquelle le méplat de retenue (250) et la seconde partie (244) du premier dispositif de retenue de fixation (240) sont situés en avant de la partie d'interface de capot de soufflante (254).

4. Nacelle (100 ; 300) selon la revendication 2, dans laquelle le méplat de retenue (150 ; 350 ; 450) et la seconde partie (144 ; 344 ; 442) du premier dispositif de retenue de fixation (140 ; 340 ; 440) sont situés à l'arrière de la partie d'interface de capot de soufflante (154 ; 354 ; 454).

5. Nacelle (200) selon une quelconque revendication précédente, comprenant en outre :
un inverseur de poussée (206) à l'arrière du capot de soufflante (204) ; et
un second dispositif de retenue de fixation (270) couplé entre le panneau de capot de soufflante (204a) et l'inverseur de poussée (206), le second dispositif de retenue de fixation (270) comportant un réceptacle (272) couplé à la surface intérieure (246) du panneau de capot de soufflante (204a) et un goujon (274) accouplé à une bride d'inverseur de poussée avant (280) de l'inverseur de poussée (206).

6. Nacelle (100 ; 200 ; 300) selon une quelconque revendication précédente, dans laquelle la première partie (142 ; 242 ; 342) du premier dispositif de retenue de fixation (140 ; 240 ; 340) comprend un réceptacle (142 ; 242 ; 342), et dans laquelle la seconde partie (144 ; 244 ; 344) du premier dispositif de retenue de fixation (140 ; 240 ; 340) comprend un goujon (144 ; 244 ; 344).

7. Nacelle selon l'une quelconque des revendications 2 à 5, dans laquelle la première partie (444) du premier dispositif de retenue de fixation (440) comprend un goujon (444), et dans laquelle la seconde partie (442) du premier dispositif de retenue de fixation (440) comprend un réceptacle (442).

8. Nacelle (300) selon la revendication 2, 3 ou 4, comprenant en outre un second dispositif de retenue de fixation (340b) comportant au moins l'un d'un réceptacle (342) ou d'un goujon (344) couplé à la surface intérieure (346) du panneau de capot de soufflante (304a), dans laquelle la première partie (342) du premier dispositif de retenue de fixation (340) est située à proximité d'un premier coin avant du panneau de capot de soufflante (304a), et dans laquelle au moins l'un des réceptacles (342) ou le goujon (344) du second dispositif de retenue de fixation (340b) est situé à proximité d'un second coin avant du panneau de capot de soufflante (304a) circonférentiellement opposé au premier coin avant.

9. Nacelle (100 ; 200 ; 300) selon la revendication 2, 3 ou 4, dans laquelle au moins l'une parmi la première partie (142 ; 242 ; 342) du premier dispositif de retenue de fixation (140 ; 240 ; 340 ; 440) ou la seconde partie (442) du premier dispositif de retenue de fixation (140 ; 240 ; 340 ; 440) comprend un réceptacle (142 ; 242 ; 342 ; 442) définissant un canal (166).

10. Nacelle (100 ; 200 ; 300) selon la revendication 9, dans laquelle le réceptacle (142 ; 242 ; 342 ; 442) comprend une paire de pattes (142a, 142b), et dans laquelle une partie proximale (172) de la paire de pattes (142a, 142b) définit une partie centrale (174) du canal (166), la partie centrale (174) du canal (166) comprenant une largeur axiale variable.

11. Nacelle (100 ; 200 ; 300) selon la revendication 10, dans laquelle une partie distale (168) de la paire de pattes (142a, 142b) définit une embouchure (170) du canal (166), l'embouchure (170) du canal (166) comprenant une largeur axiale variable.

12. Nacelle (100 ; 200 ; 300) selon une quelconque revendication précédente, dans laquelle la première partie (142 ; 242 ; 342 ; 444) du premier dispositif de retenue de fixation (140 ; 240 ; 340 ; 440) s'étend depuis une première extrémité circonférentielle (128 ; 134) du panneau de capot de soufflante (104a ; 104b ; 204a ; 304a ; 404) à une seconde extrémité circonférentielle (130 ; 136) du panneau de capot de soufflante (104a ; 104b ; 204a ; 304a ; 404) opposée à la première extrémité circonférentielle (128 ; 134).

13. Nacelle (100 ; 200 ; 300) selon l'une quelconque des revendications 2 à 5, dans laquelle :
l'une parmi la première partie (142 ; 242 ; 342 ; 444) du premier dispositif de retenue de fixation (140 ; 240 ; 340 ; 440) ou la seconde partie (144 ; 244 ; 344 ; 442) du premier dispositif de retenue de fixation (140 ; 240 ; 340 ; 440) comprend un réceptacle (142 ; 242 ; 342 ; 442) définissant un canal (166) de largeur variable ; et
l'autre parmi la première partie (142 ; 242 ; 342 ; 444) du premier dispositif de retenue de fixation (140 ; 240 ; 340 ; 440) ou la seconde partie (144 ; 244 ; 344 ; 442) du premier dispositif de retenue de fixation (140 ; 240 ; 340 ; 440) comprend un goujon (144 ; 244 ; 344 ; 444),
dans laquelle le réceptacle (142 ; 242 ; 342 ; 442) est configuré pour recevoir et venir en prise avec le goujon (144 ; 244 ; 344 ; 444).

14. Nacelle (100 ; 200 ; 300) selon la revendication 13, dans laquelle :
le goujon (144 ; 244 ; 344 ; 444) comprend une tête (180) et une tige (182), et dans laquelle une largeur (W3) de la tête (180) varie de sorte que la largeur (W3) de la tête (180) diminue entre un point le plus large (184) de la tête (180) et la tige (182) et entre le point le plus large (184) de la tête (180) et une extrémité distale (186) de la tête (180) opposée à la tige (182), dans laquelle une largeur axiale (W4) de la tige (182) est supérieure à une largeur axiale (W1) du réceptacle (142 ; 242 ; 342 ; 442) dans une état d'équilibre élastique du réceptacle (142 ; 242 ; 342 ; 442).

15. Système de propulsion (112) comprenant :
un moteur à turbine à gaz (114) ; et
la nacelle (100 ; 200 ; 300) selon une quelconque revendication précédente et radialement vers l'extérieur du moteur à turbine à gaz (114).
